# EUROPÄISCHE PATENTSCHRIFT

(11) **EP 4 062 158 B1**
(45) Veröffentlichungstag und Bekanntmachung des Hinweises auf die Patenterteilung: **11.06.2025**
(21) Anmeldenummer: 20804208.5
(22) Anmeldetag: 09.11.2020
(51) Int. Cl.: G01N 22/00, H01P 5/103, H01Q 13/06, H01P 1/04

(54) **ANTENNENANORDNUNG ZUR ABSTRAHLUNG VON MIKROWELLEN UND MESSANORDNUNG MIT MINDESTENS EINER SOLCHEN ANTENNENANORDNUNG**
ANTENNA ASSEMBLY FOR EMITTING MICROWAVES, AND MEASURING ASSEMBLY HAVING AT LEAST ONE SUCH ANTENNA ASSEMBLY
ENSEMBLE ANTENNE D'ÉMISSION DE MICRO-ONDES ET ENSEMBLE DE MESURE AYANT AU MOINS LEDIT ENSEMBLE ANTENNE

(30) Priorität: 21.11.2019 DE 102019131504
(43) Veröffentlichungstag der Anmeldung: 28.09.2022
(73) Patentinhaber: Endress+Hauser Flowtec AG, 4153 Reinach (CH)
(72) Erfinder: PFLÜGER, Stefan, 80995 München (DE); IHRINGER, Thilo, 79618 Rheinfelden (DE)
(74) Vertreter: Endress + Hauser Group Services (Deutschland) AG+Co. KG
(86) Internationale Anmeldenummer: PCT/EP2020/081431
(87) Internationale Veröffentlichungsnummer: WO 2021/099152

(56) Entgegenhaltungen:
- EP-A1- 0 922 942
- DE-A1- 10 023 497
- DE-A1- 10 051 297
- DE-A1- 102012 105 281
- DE-A1- 3 633 086
- JP-A- 2000 321 218
- US-A- 5 851 083

## Beschreibung

Die vorliegende Erfindung betrifft eine Messanordnung mit zwei Antennenanordnungen zum Abstrahlung von Mikrowellen. Aus der Literatur ist bekannt, dass aus Laufzeit und Dämpfung der Ausbreitung einer elektromagnetischen Welle in einem Medium auf die komplexwertige Permittivität dieses Materials rückgeschlossen werden kann. Die komplexwertige Permittivität kann wiederum genutzt werden, um Rückschlüsse auf Medieneigenschaften wie z.B. den Wassergehalt zu ziehen.

Daher sind Messanordnung zum Ermitteln dielektrischer Eigenschaften wie der komplexwertigen Permittivität von Prozessmedien bekannt. Die Offenlegungsschrift DE 30 38 725 A1 offenbart ein Gerät zur Feuchtebestimmung. Die Offenlegungsschriften DE 44 26 280 A1 und DE 101 64 107 C1 offenbaren Vorrichtungen zum Messen der Beladung eines Gasstroms mit Feststoffanteilen. Die Veröffentlichung US 2016 313 259 A1 offenbart eine Temperaturkompensation für die Ermittlung dielektrischer Eigenschaften eines Mediums. WO 1991 005 243 A1 offenbart eine Vorrichtung zum Messen der Konzentration zweier Substanzen. Die Offenlegungsschrift DE 102017 131 269A1 offenbart eine Vorrichtung zur Bestimmung des Fettgehalts von Milch. Die Offenlegungsschrift DE 10 2012 105 281 A1 offenbart ein Füllstandsmessgerät zur Bestimmung des Füllstandes eines Prozessmediums in einem Behältnis mittels eines Laufzeitverfahrens. Dafür weist das Füllstandsmessgerät genau ein Mittel zur Bestimmung des Dielektrizitätszahl auf, welches einen Wellenleiter für ein hochfrequentes Messsignal umfasst, der mit einem Dielektrikum gefüllt ist.

Das Patent GB 2 293 014 offenbart eine Messanordnung mit einer Hohlleiterantenne mit einem Edelstahlkörper, in dessen Hohlraum eine Glas-Keramik-Füllung eingeschmolzen ist. Dies erfordert erstens eine aufwändige Herstellung und zweitens weist die Antenne ein großes Volumen auf, da die Permittivität der Glaskeramik vergleichsweise gering ist. Der Erfindung liegt daher die Aufgabe zu Grunde, eine kompakte Hohlleiterantenne mit großer Druck- und Temperaturbeständigkeit bereitzustellen, die in einem großen Frequenzbereich einsetzbar ist. Die Aufgabe wird erfindungsgemäß gelöst durch die Messanordnung gemäß dem unabhängigen Patentanspruch 1.

Die erfindungsgemäße Messanordnung umfasst:
- zwei Antennenanordnungen zum Abstrahlen von Mikrowellen, jeweils umfassend:
   einen dielektrischen Hohlleiterkörper; und
   einen Trägerkörper;
   wobei der dielektrische Hohlleiterkörper zumindest entlang einer umlaufenden Mantelfläche eine elektrisch leitende Oberfläche aufweist,
   wobei der dielektrische Hohlleiterkörper eine elektrisch nichtleitende Abstrahlfläche aufweist,
   wobei der dielektrische Hohlleiterkörper eine Koppleraufnahme aufweist;
   wobei der Trägerkörper den dielektrischen Hohlleiterkörper zumindest entlang der Mantelfläche umgibt,
   wobei der dielektrische Hohlleiterkörper in dem Trägerkörper fixiert ist,
   wobei der Trägerkörper eine Abstrahlöffnung aufweist, wobei die Abstrahlfläche mit der Abstrahlöffnung fluchtet;
- ein Messrohr mit zwei einander gegenüberliegende Antennenöffnungen an welchen jeweils eine der Antennenanordnungen montiert ist,
- eine Mess- und Betriebsschaltung, die mit jeder Antennenanordnung jeweils mittels einer Signalleitung verbunden ist,
und ist dadurch gekennzeichnet, dass der Trägerkörper einen Werkstoff mit einem Elastizitätsmodul von nicht weniger als 50 GPa aufweist.

In einer Weiterbildung der Erfindung weist der dielektrische Hohlleiterkörper eine Permittivität von nicht weniger als 8 bei 2 GHz aufweist, insbesondere nicht weniger als 9,5 bei 2 GHz auf.

In einer Weiterbildung der Erfindung weist der dielektrische Hohlleiterkörper einen keramischen Werkstoff auf, insbesondere Aluminiumoxid, Zirconiumoxid oder Titandioxid.

In einer Weiterbildung der Erfindung weist der dielektrische Hohlleiterkörper eine Grundform eines Parallelepipeds auf, insbesondere eines Quaders.

In einer Weiterbildung der Erfindung umfasst die elektrisch leitende Oberfläche des dielektrischen Hohlleiterkörpers eine metallische Beschichtung, wodurch ein gefüllter Hohlleiter gebildet wird.

In einer Weiterbildung der Erfindung umfasst die metallische Beschichtung ein Aktivhartlot.

Mit der obigen Materialwahl und der obigen Form kann eine kompakte Antenne realisiert werden, denn die Größe der Antenne bestimmt sich durch die Cutoff-Frequenz f_{c} des gefüllten Hohlleiters. Für den üblicherweise verwendeten Grundmode TE10 eines Rechteckhohlleiters mit den Rechteckseiten a, b gilt a = c_{d} / (2 f_{c} ), wobei für die Ausbreitungsgeschwindigkeit c_{d} im Dielektrikum gilt c_{d} = c₀ / εᵣ^{1/2}. Die Größe der Antenne ist also umgekehrt proportional zur Quadratwurzel der Permittivität des dielektrischen Füllmaterials. Bei einer Permittivität *ε_{r,S-Class}* ≈ 5,2 würde ein derartiger Antennenhohlleiter bei einer Cutoff Frequenz f_{c} = 2 GHz im Querschnitt also eine Mindestbreite von etwa 3,3 cm aufweisen. Wird dagegen ein Dielektrikum mit einer Permittivität εᵣ von mindestens 8 bei 2 GHz verwendet, so beträgt die Mindestbreite nur noch 2,7 cm. Dies ist insoweit vorteilhaft, als dann auch der Durchbruch in dem Trägerkörper auf dieses Maß begrenzt ist. Weiterhin wird mit den gewählten Materialien für das Dielektrikum die Transmission in ein wässriges Medium gegenüber Antennen mit einem Dielektrikum aus Glas erheblich gesteigert.

In einer Weiterbildung der Erfindung umfasst die Koppleraufnahme eine Bohrung, durch welche sich ein stiftförmiger Koppler, insbesondere Koaxialkoppler erstreckt, der mit einem kapazitiv wirkenden Element terminiert ist.

In einer Weiterbildung der Erfindung weist das kapazitiv wirkende Element einen Kondensator, beispielsweise in Form eines Platinenstücks mit integriertem Kondensator, eine Koaxialkapazität oder ein offenes Leitungsstück auf.

In einer Weiterbildung der Erfindung weist der Trägerkörper elektrisch leitende Oberflächen auf, welche den dielektrischen Hohlleiterkörper umgeben.

In einer Weiterbildung der Erfindung weist der Trägerkörper einen metallischen Werkstoff auf, insbesondere Stahl.

In einer Weiterbildung der Erfindung weist der Trägerkörper eine Hohlleiterkammer für den dielektrischen Hohlleiterkörper auf, wobei die Hohlleiterkammer Querschnitte aufweist, die parallel zur Abstrahlfläche verlaufen, und die zu mindestens 90% insbesondere 95% der Querschnittsfläche durch den dielektrischen Hohlleiterkörper ausgefüllt sind.

In einer Weiterbildung der Erfindung ist der dielektrische Hohlleiterkörper mit einem Polymer in der Hohlleiterkammer fixiert.

In einer Weiterbildung der Erfindung weist der Trägerkörper einen Prozessanschluss auf zum Anschließen der Antennenanordnung an einer Antennenöffnung einer Rohrleitung oder eines Behälters, um die Abstrahlöffnung im Bereich der Antennenöffnung zu positionieren.

In einer Weiterbildung der Erfindung weist der Werkstoff ein Elastizitätsmodul von nicht weniger als 150 GPa auf.

Die Erfindung wird nun anhand des in den Zeichnungen dargestellten Ausführungsbeispiels näher erläutert.

Es zeigt:
Fig. 1: eine räumliche Darstellung eines Ausführungsbeispiels einer erfindungsgemäßen Antennenanordnung;
Fig. 2: einen Querschnitt durch ein Ausführungsbeispiel einer erfindungsgemäßen Messanordnung; und
Fig. 3: ein Diagramm zum Anteil der reflektierten Leitung an der Grenzfläche zwischen der Antenne und einem wässrigen Medium.

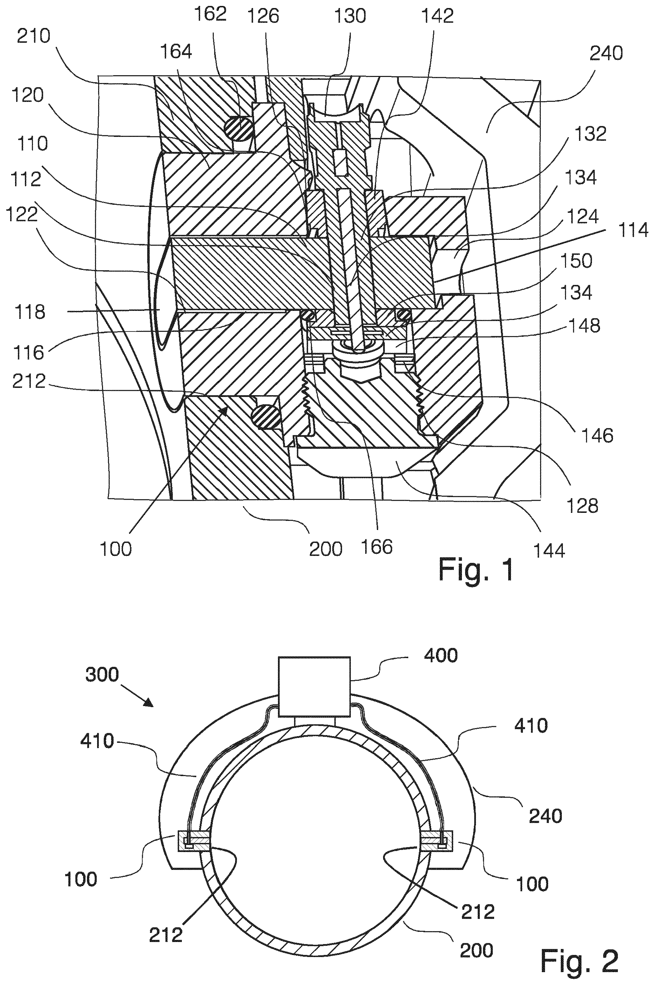

Das in Fig. 1 dargestellte Ausführungsbeispiel einer erfindungsgemäßen Antennenanordnung 100 umfasst einen dielektrischen Hohlleiterkörper 110, der einen keramischen Werkstoff hoher Permittivität aufweist, beispielsweise Aluminiumoxid, Zirkoniumdioxid oder Titandioxid. Der Hohlleiterkörper 110 weist eine im Wesentlichen quaderförmige Grundform mit leicht abgerundeten Kanten auf. Durch den Hohlleiterkörper 110 erstreckt sich parallel zu seiner größten Hauptträgheitsachse eine durchgehende Koppelbohrung 112. Eine Mantelfläche des Hohlleiterkörpers 110, welche dessen minimale Hauptträgheitsachse umgibt und eine rückseitige Stirnfläche 114 des Hohlleiterkörpers 110, deren Oberflächennormale in Richtung der minimalen Hauptträgheitsachse des Hohlleiterkörpers verläuft, weist eine metallische Beschichtung 116 auf, die mittels eines Aktivlots präpariert ist, wobei eine von der ersten Stirnfläche 114 abgewandte zweite Stirnfläche, die als Abstrahlfäche 118 dient, frei von der metallischen Beschichtung ist. Weiterhin ist ein an die Abstrahlfläche angrenzender, umlaufender Endabschnitt der Mantelfläche frei von der metallischen Beschichtung 116.

Die Antennenanordnung 100 umfasst weiterhin einen metallischen Trägerkörper 120, der insbesondere aus Edelstahl gefertigt ist, und einen ersten Endabschnitt mit einer zylindrischen Grundform aufweist. Eine Stirnfläche des ersten Endabschnitts weist eine Abstrahlöffnung auf, von der sich eine Hohlleiterkammer 122 in den Trägerkörper 120 erstreckt, in welcher der Hohlleiterkörper 110 angeordnet ist, wobei die Hohlleiterkammer 122 Wände aufweist, die im Wesentlichen parallel zu den metallisierten Flächen des Hohlleiterkörpers 110 verlaufen. Der Endabschnitt der Mantelfläche des Hohlleiterkörpers 110, der frei von Metallisierung ist, ist nahe der Stirnfläche, des ersten Endabschnitts des Trägerkörpers120 angeordnet. Der Trägerkörper 120 weist in einer rückseitigen Stirnfläche, welche der ersten Stirnfläche abgewandt ist eine Füllöffnung 124 auf, die mit der Hohlleiterkammer 122 kommuniziert. Wobei durch die Füllöffnung ein Klebstoff in die Hohlleiterkammer 122 eingepresst ist, um ein umlaufendes Spaltvolumen zwischen den Oberflächen des Hohlleiterkörpers 110 und den Wänden der Hohlleiterkammer 122 aufzufüllen, wodurch das Spaltvolumen einschließlich des durch den nicht metallisierten Endabschnitt der Mantelfläche des Hohlleiterkörpers 110 bis zur Abstrahlfläche 118 abgedichtet ist. Damit wird das Eindringen eines Mediums von der ersten Stirnfläche des Trägerkörpers 120 her in die Hohlleiterkammer 122 zuverlässig verhindert, insbesondere um eine Korrosion der metallischen Beschichtung 116 der Mantelfläche zu vermeiden. Sollte der Klebstoff im Spalt nahe der ersten Stirnfläche beschädigt werden so kommt es dennoch nicht zur einsetzenden Korrosion, da der Endabschnitt des Hohlleiterkörpers 110 nicht metallisiert ist.

Der Trägerkörper 120 weist weiterhin eine Koaxialkopplerbohrung 126 auf, die sich mit der fluchtend mit der Koppelbohrung 112 des Hohlleiterkörpers 110 von einer äußeren Oberfläche des Trägerkörpers 120 in die Hohlleiterkammer 122 erstreckt. Weiterhin weist der Trägerkörper 120 eine Kondensatorkammerbohrung 128 auf, die sich, ebenfalls fluchtend mit der Koppelbohrung 112 des Hohlleiterkörpers 110, von einer der Koaxialkopplerbohrung 126 gegenüberliegenden Oberfläche in die Hohlleiterkammer 122 erstreckt.

In die Koaxialkopplerbohrung 126 ist eine durchbohrte metallische Kontaktschraube 142 geschraubt, welche mit ihrer Stirnfläche gegen die metallische Beschichtung 116 drückt und so einen definierten galvanischen Kontakt zwischen der metallischen Beschichtung 116 und dem Trägerkörper 120 herstellt. Durch die Bohrung der Kontaktschraube 142 und die Koppelbohrung 112 des Hohlleiterkörpers 110 ist ein Koaxialkoppler 130 geführt, der einen Außenleiter 132 und einen Innenleiter 134 aufweist, wobei der Innenleiter 134 bis in die Kondensatorkammerbohrung 128 hineinragt. Der Außenleiter 132 steht über die Kontaktschraube 142 ebenfalls mit der metallischen Beschichtung 116 und dem Trägerkörper 120 im galvanischen Kontakt.

Um eine effektive kapazitive Einkopplung einer Mikrowelle in den Hohlleiterkörper 110 in einem Frequenzbereich von beispielsweise etwa 2 GHz bis 8 GHz zu ermöglichen, ist noch der Koaxialkoppler 130 noch mit einer passenden Kapazität zu terminieren, insbesondere deshalb, weil der Hohlleiterkörper aufgrund der gewählten Materialien eine sehr große Kapazität aufweist. Hierzu ist der Innenleiter 134 des Koaxialkopplers mit einem Kondensator 134 verbunden, der insbesondere als Leiterplattenkondensator ausgebildet und in der Kondensatorkammerbohrung 128 angeordnet ist. Der Kondensator 134 ist in der Kondensatorkammerbohrung 128 folgendermaßen axial eingespannt. Ein ringscheibenförmiges Druckstück 114 liegt mit einem ringförmigen axialen Vorsprung an der Mantelfläche des Hohlleiterkörpers 110 an. Der Kondensator 134 stützt sich am Druckstück 114 ab. An der dem Druckstück 114 abgewandten Seite des Kondensators 134 ist eine Isolationsscheibe 148 angeordnet die mit einem Tellerfederstapel 148 und einer Spannschraube 144, die in die Kondensatorkammerbohrung 128 geschraubt ist, gegen den Kondensator 134 axial eingespannt ist. Der Tellerfederstapel 146 bewirkt, dass die Einspannkräfte trotz unterschiedlicher Wärmeausdehnungskoeffizienten der Komponenten nur gering schwanken. Das Druckstück 114 und die Kontaktschraube 142 pressen zudem jeweils einen O-Ring 166, 164 gegen die Mantelfläche des Hohlleiterkörpers 110, wodurch die Kondensatorkammerbohrung 128 und die Koaxialkopplerbohrung 126 gegenüber dem Spalt zwischen dem Hohlleiterköper 110 und den Wänden der Hohlleiterkammer 122 abgedichtet ist.

Der Trägerkörper 120 ist mit dem zylindrischen Endabschnitt in einer Antennenöffnung 212 einer Rohrwand 210 eines Messrohrs 200 angeordnet, wobei zwischen der Rohrwand 210 und dem Trägerkörper 120 ein Dichtring 162 axial eingespannt ist. Die Antennenanordnung 100 ist mit einem optionalen Schutzgehäuse 240 überdeckt, in dem auch (in Fig. 2 dargestellte) Signalleitungen 410 zwischen einer Betriebsschaltung und dem Koaxialkoppler geführt sind.

Die erfindungsgemäße Messanordnung 300 umfasst zwei Antennenanordnungen 100 und ein Messrohr 200 mit zwei einander gegenüberliegenden Antennenöffnungen 212, in denen jeweils eine der Antennenanordnungen 100 montiert ist. Weiterhin umfasst die Messanordnung eine Betriebs- und Messschaltung 400, die über zwei Koaxialleitungen 410 mit den beiden Antennenanordnungen 100 verbunden sind. Die Antennenanordnungen und koaxiale Signalleitungen sind noch von einem metallischen Schutzgehäuse 240 überdeckt, welches erstens einen zusätzlichen EMV-Schutz bildet und zweitens Verschmutzung und mechanische Einwirkungen auf die Antennenanordnungen und Signalleitungen verhindert. Die Betriebs- und Messschaltung ist dazu eingerichtet, Signalsequenzen unterschiedlicher Frequenz im Frequenzbereich von beispielsweise 2 bis 8 GHz über eine der Antennenanordnungen in ein im Messrohr 200 befindliches Medium einzustrahlen und mit der Anderen Antennenanordnung zu empfangen. Anhand der Laufzeit bzw. Dämpfung der Signalsequenzen lassen sich die komplexe Permittivität und daraus weitere Medieneigenschaften, wie Feststoffgehalt bestimmen.

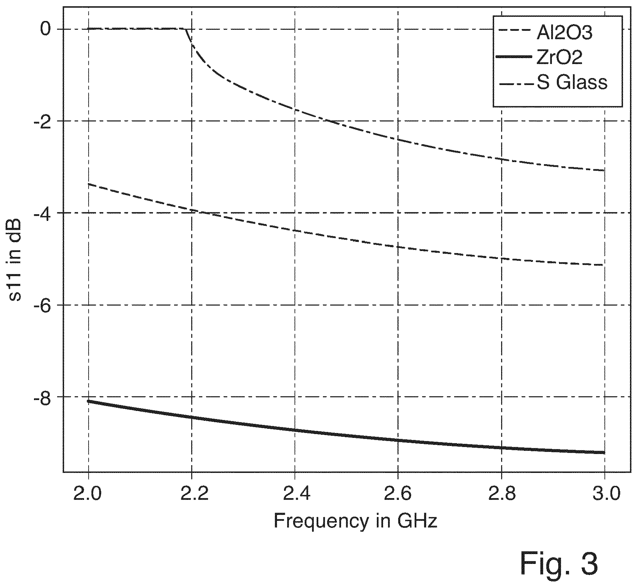

Für die Leistungsfähigkeit der Messanordnung ist es vorteilhaft, wenn eine Reflektion an der Abstrahlfläche 118 des Hohlleiterkörpers möglichst gering ist. Dies kann über das Material des Hohlleiterkörpers 110 beeinflusst werden. Fig 3 zeigt hierzu den errechneten Reflektionsanteil an der Abstrahlfläche für verschiedene Materialien des Hohlleiterkörpers. Als Medium wurde hier Wasser angenommen, und die Breite des Hohlleiterkörpers wurde mit 30 mm angesetzt. Wenn der Hohlleiterkörper ein S-Glass mit einer angenommenen Permittivität von 5,1 aufweist ist eine Wellenausbreitung bis zu ca. 2,2GHz gar nicht möglich, da diese Frequenzen unterhalb der Cutoff-Frequenz liegen. Ein Hohlleiterkörper aus Al2O3 ist bereits deutlich besser geeignet, als die Hohlleiterkörper des Stands der Technik, wenngleich noch Reflexionen im Bereich von *s*₁₁ ≈ -4 *dB* auftreten. Mit einer ZrO2-Füllung wird ein durchweg guter Übergang der elektromagnetischen Leistung in das Wasser erreicht. Es zeigt sich also, dass mit den erfindungsgemäß verwendeten keramischen Hohlleiterkörpern eine effiziente Abstrahlung in stark wasserhaltige Medien bei gegebener Antennengeometrie erreichbar ist.

## Patentansprüche

1. Messanordnung, umfassend:
- zwei Antennenanordnungen (100) zum Abstrahlen von Mikrowellen, jeweils umfassend:
- einen dielektrischen Hohlleiterkörper (110); und
- einen Trägerkörper (120);
wobei der dielektrische Hohlleiterkörper (110) zumindest entlang einer umlaufenden Mantelfläche eine elektrisch leitende Oberfläche aufweist,
wobei der dielektrische Hohlleiterkörper (110) eine elektrisch nichtleitende Abstrahlfläche (118) aufweist,
wobei der dielektrische Hohlleiterkörper (110) eine Koppleraufnahme (112) aufweist;
wobei der Trägerkörper (120) den dielektrischen Hohlleiterkörper (110) zumindest entlang der Mantelfläche umgibt,
wobei der dielektrische Hohlleiterkörper (110) in dem Trägerkörper (120) fixiert ist,
wobei der Trägerkörper (120) eine Abstrahlöffnung aufweist, wobei die Abstrahlfläche (118) mit der Abstrahlöffnung fluchtet;
- ein Messrohr mit zwei einander gegenüberliegende Antennenöffnungen (212) an welchen jeweils eine der Antennenanordnungen (100) montiert ist,
- eine Mess- und Betriebsschaltung, die mit jeder Antennenanordnung (100) jeweils mittels einer Signalleitung verbunden ist,
**dadurch gekennzeichnet, dass** der Trägerkörper (120) einen Werkstoff mit einem Elastizitätsmodul von nicht weniger als 50 GPa aufweist.

2. Messanordnung nach Anspruch 1, wobei der dielektrische Hohlleiterkörper eine Permittivität von nicht weniger als 8 bei 2 GHz aufweist, insbesondere nicht weniger als 9,5 bei 2 GHz aufweist.

3. Messanordnung nach Anspruch 1, wobei der dielektrische Hohlleiterkörper (110) einen keramischen Werkstoff aufweist, insbesondere Aluminiumoxid, Zirkoniumdioxid oder Titandioxid.

4. Messanordnung nach Anspruch 1 oder 2, wobei der dielektrische Hohlleiterkörper (110) eine Grundform eines Parallelepipeds aufweist, insbesondere eines Quaders.

5. Messanordnung nach einem der vorhergehenden Ansprüche, wobei die elektrisch leitende Oberfläche des dielektrischen Hohlleiterkörpers (110) eine metallische Beschichtung (116) umfasst.

6. Messanordnung nach Anspruch 5, wobei die metallische Beschichtung (116) ein Aktivlot oder Aktivhartlot umfasst.

7. Messanordnung nach einem der vorhergehenden Ansprüche, wobei die Koppleraufnahme eine Bohrung umfasst, durch welche sich ein stiftförmiger Koppler, insbesondere Koaxialkoppler (130) erstreckt, der mit einem kapazitiv wirkenden Element terminiert ist.

8. Messanordnung nach Anspruch 7, wobei das kapazitiv wirkende Element einen Kondensator, beispielsweise in Form eines Platinenstücks mit integriertem Kondensator, eine Koaxialkapazität oder ein offenes Leitungsstück aufweist.

9. Messanordnung nach einem der vorhergehenden Ansprüche, wobei der Trägerkörper (120) elektrisch leitende Flächen aufweist, welche den dielektrischen Hohlleiterkörper (110) umgeben.

10. Messanordnung nach einem der vorhergehenden Ansprüche, wobei der Trägerkörper (120) einen metallischen Werkstoff aufweist, insbesondere Stahl.

11. Messanordnung nach einem der vorhergehenden Ansprüche, wobei der Trägerkörper (120) eine Hohlleiterkammer (122) für den dielektrischen Hohlleiterkörper (110) aufweist, wobei die Hohlleiterkammer (122) Querschnitte aufweist, die parallel zur Abstrahlfläche (118) verlaufen, und die zu mindestens 90% insbesondere 95% der Querschnittsfläche durch den dielektrischen Hohlleiterkörper (110) ausgefüllt sind.

12. Messanordnung nach einem der vorhergehenden Ansprüche, wobei der dielektrische Hohlleiterkörper (110) mit einem Polymer in der Hohlleiterkammer fixiert ist.

13. Messanordnung nach einem der vorhergehenden Ansprüche, wobei der Trägerkörper (120) einen Prozessanschluss aufweist zum Anschließen der Antennenanordnung (100) an einer Antennenöffnung (212) einer Rohrleitung oder eines Behälters, um die Abstrahlöffnung im Bereich der Antennenöffnung (212) zu positionieren.

14. Messanordnung nach einem der vorhergehenden Ansprüche, wobei der Werkstoff ein Elastizitätsmodul von nicht weniger als 150 GPa aufweist.

## Claims

1. A measurement arrangement comprising:
- two antenna arrangements (100) for radiating microwaves, each comprising:
- a dielectric waveguide body (110); and
- a carrier body (120);
wherein the dielectric waveguide body (110) an electrically conductive surface at least along a circumferential sheath surface,
wherein the dielectric waveguide body (110) has an electrically non-conductive radiating surface (118),
wherein the dielectric waveguide body (110) has a coupler receptacle (112);
wherein the carrier body (120) surrounds the dielectric waveguide body (110) at least along the lateral surface,
wherein the dielectric waveguide body (110) is fixed in the carrier body (120),
wherein the carrier body (120) has a radiating aperture, the radiating surface (118) being aligned with the radiating aperture;
- a measuring tube with two opposite antenna openings (212) on each of which one of the antenna arrangements (100) is mounted,
- a measuring and operating circuit which is connected to each antenna arrangement (100) by means of a signal line,
**characterized in that** the carrier body (120) comprises a material having a modulus of elasticity of not less than 50 GPa.

2. Measuring arrangement according to claim 1, wherein the dielectric waveguide body has a permittivity of not less than 8 at 2 GHz, in particular not less than 9.5 at 2 GHz.

3. Measuring arrangement according to claim 1, wherein the dielectric waveguide body (110) comprises a ceramic material, in particular aluminum oxide, zirconium dioxide or titanium dioxide.

4. Measuring arrangement according to claim 1 or 2, wherein the dielectric waveguide body (110) has a basic shape of a parallelepiped, in particular a cuboid.

5. Measuring arrangement according to any one of the preceding claims, wherein the electrically conductive surface of the dielectric waveguide body (110) comprises a metallic coating (116).

6. Measuring arrangement according to claim 5, wherein the metallic coating (116) comprises an active solder or active brazing alloy.

7. Measuring arrangement according to one of the preceding claims, wherein the coupler receptacle comprises a bore through which extends a pin-shaped coupler, in particular coaxial coupler (130), which is terminated with a capacitively acting element.

8. Measuring arrangement according to claim 7, wherein the capacitively acting element comprises a capacitor, for example in the form of a piece of circuit board with integrated capacitor, a coaxial capacitance or an open conductor piece.

9. Measuring arrangement according to one of the preceding claims, wherein the carrier body (120) has electrically conductive surfaces which surround the dielectric waveguide body (110).

10. Measuring arrangement according to one of the preceding claims, wherein the carrier body (120) comprises a metallic material, in particular steel.

11. Measuring arrangement according to one of the preceding claims, wherein the carrier body (120) has a waveguide chamber (122) for the dielectric waveguide body (110), wherein the waveguide chamber (122) has cross-sections which run parallel to the radiating surface (118) and which are filled to at least 90%, in particular 95%, of the cross-sectional area by the dielectric waveguide body (110).

12. Measuring arrangement according to one of the preceding claims, wherein the dielectric waveguide body (110) is fixed with a polymer in the waveguide chamber.

13. Measuring arrangement according to any one of the preceding claims, wherein the support body (120) comprises a process connection for connecting the antenna arrangement (100) to an antenna opening (212) of a pipeline or a container in order to position the radiation opening in the region of the antenna opening (212).

14. Measuring arrangement according to any one of the preceding claims, wherein the material has a modulus of elasticity of not less than 150 GPa.

## Revendications

1. Dispositif de mesure comprenant :
- deux réseaux d'antennes (100) pour émettre des micro-ondes, chacun comprenant :
- un corps de guide d'ondes diélectrique (110) ; et
- un corps de support (120) ;
dans lequel le corps de guide d'ondes diélectrique (110) présente une surface électriquement conductrice au moins le long d'une surface d'enveloppe périphérique,
dans lequel le corps de guide d'ondes diélectrique (110) comprend une surface rayonnante électriquement non conductrice (118),
dans lequel le corps de guide d'ondes diélectrique (110) comprend un logement de coupleur (112) ;
dans lequel le corps de support (120) entoure le corps de guide d'ondes diélectrique (110) au moins le long de la surface d'enveloppe,
dans lequel le corps de guide d'ondes diélectrique (110) est fixé dans le corps de support (120),
dans lequel le corps de support (120) présente une ouverture de rayonnement, la surface de rayonnement (118) étant alignée avec l'ouverture de rayonnement ;
- un tube de mesure avec deux ouvertures d'antenne (212) opposées l'une à l'autre sur lesquelles est monté respectivement l'un des ensembles d'antennes (100),
- un circuit de mesure et de fonctionnement connecté à chaque réseau d'antennes (100) respectivement au moyen d'une ligne de signal,
**caractérisé en ce que** le corps de support (120) comprend un matériau ayant un module d'élasticité non inférieur à 50 GPa.

2. Dispositif de mesure selon la revendication 1, dans lequel le corps de guide d'ondes diélectrique présente une permittivité non inférieure à 8 à 2 GHz, en particulier non inférieure à 9,5 à 2 GHz.

3. Dispositif de mesure selon la revendication 1, dans lequel le corps de guide d'ondes diélectrique (110) comprend un matériau céramique, en particulier de l'oxyde d'aluminium, du dioxyde de zirconium ou du dioxyde de titane.

4. Dispositif de mesure selon la revendication 1 ou 2, dans lequel le corps de guide d'ondes diélectrique (110) présente une forme de base de parallélépipède, en particulier de parallélépipède rectangle.

5. Dispositif de mesure selon l'une quelconque des revendications précédentes, dans lequel la surface électriquement conductrice du corps de guide d'ondes diélectrique (110) comprend un revêtement métallique (116).

6. Dispositif de mesure selon la revendication 5, dans lequel le revêtement métallique (116) comprend une soudure active ou une brasure active.

7. Dispositif de mesure selon l'une des revendications précédentes, dans lequel le logement de coupleur comprend un alésage à travers lequel s'étend un coupleur en forme de broche, notamment un coupleur coaxial (130), qui est terminé par un élément à effet capacitif.

8. Dispositif de mesure selon la revendication 7, dans lequel l'élément à effet capacitif comprend un condensateur, par exemple sous la forme d'une pièce de platine avec un condensateur intégré, une capacité coaxiale ou une pièce conductrice ouverte.

9. Dispositif de mesure selon l'une des revendications précédentes, dans lequel le corps de support (120) présente des surfaces électriquement conductrices qui entourent le corps de guide d'ondes diélectrique (110).

10. Ensemble de mesure selon l'une quelconque des revendications précédentes, dans lequel le corps de support (120) comprend un matériau métallique, notamment de l'acier.

11. Dispositif de mesure selon l'une des revendications précédentes, dans lequel le corps de support (120) présente une chambre de guide d'ondes (122) pour le corps de guide d'ondes diélectrique (110), la chambre de guide d'ondes (122) présentant des sections transversales qui s'étendent parallèlement à la surface de rayonnement (118) et qui sont remplies à au moins 90%, en particulier à 95% de la surface de la section transversale par le corps de guide d'ondes diélectrique (110).

12. Dispositif de mesure selon l'une quelconque des revendications précédentes, dans lequel le corps de guide d'onde diélectrique (110) est fixé dans la chambre de guide d'onde par un polymère.

13. Ensemble de mesure selon l'une quelconque des revendications précédentes, dans lequel le corps de support (120) comporte un raccord de processus pour raccorder l'ensemble d'antennes (100) à une ouverture d'antenne (212) d'une canalisation ou d'un récipient afin de positionner l'ouverture de rayonnement dans la zone de l'ouverture d'antenne (212).

14. Ensemble de mesure selon l'une quelconque des revendications précédentes, dans lequel le matériau a un module d'élasticité qui n'est pas inférieur à 150 GPa.
